# FASCICULE DE BREVET EUROPEEN

(11) **EP 3 194 752 B1**
(45) Date de publication et mention de la délivrance du brevet: **15.12.2021**
(21) Numéro de dépôt: 15770582.3
(22) Date de dépôt: 15.09.2015
(51) Int. Cl.: F02D 41/00, F02D 41/18, F02M 26/05, F02M 26/06, F02M 26/47, F02M 26/49, F02D 41/14, F02M 26/15, F02M 26/23, F02D 9/04

(54) **PROCÉDÉ DE RÉGULATION DE LA CONSOMMATION EN AIR D'UN MOTEUR À COMBUSTION INTERNE EN VUE DE LIMITER UNE TEMPÉRATURE DE GAZ BRÛLÉS RECYCLÉS À BASSE PRESSION**
VERFAHREN ZUR REGULIERUNG DES LUFTVERBRAUCHS EINER BRENNKRAFTMASCHINE UM DIE TEMPERATUR DES RÜCKGEFÜHRTEN NIEDERDRUCKABGASES ZU BEGRENZEN
METHOD FOR REGULATING THE AIR CONSUMPTION OF AN INTERNAL COMBUSTION ENGINE IN ORDER TO LIMIT THE TEMPERATURE OF THE LOW-PRESSURE RECIRCULATED EXHAUST GAS

(30) Priorité: 15.09.2014 FR 1458630
(43) Date de publication de la demande: 26.07.2017
(73) Titulaire: Renault s.a.s, 92100 Boulogne-Billancourt (FR)
(72) Inventeur: HUSSON, Anthony, 75013 Paris (FR); BRUNEL, Remy, 91410 Dourdan (FR)
(86) Numéro de dépôt international: PCT/FR2015/052461
(87) Numéro de publication internationale: WO 2016/042250

(56) Documents cités:
- EP-A1- 1 203 869
- EP-A2- 0 935 060
- FR-A1- 2 528 115
- FR-A1- 2 902 466
- FR-A1- 2 921 432
- FR-A3- 2 952 407
- US-A1- 2009 125 217
- US-A1- 2012 312 001

## Description

L'invention a pour objet les moteurs à combustion interne, notamment pour véhicules automobiles, comportant un circuit de recirculation partielle des gaz d'échappement, ainsi qu'un procédé de pilotage et de régulation du fonctionnement de tels moteurs.

Les normes d'émission de polluants des moteurs à combustion interne tels que les moteurs diesel étant de plus en plus strictes, ces moteurs sont généralement conçus avec des systèmes de recirculation de gaz d'échappement (« EGR ») soit sous forme de recirculation des gaz d'échappement à haute pression (EGR HP) ou de recirculation des gaz d'échappement à basse pression (EGR BP). Ces moteurs peuvent notamment être conçus à partir d'architectures de moteurs déjà préexistantes. Certaines pièces comme par exemple les pièces du compresseur d'un turbocompresseur du moteur peuvent ne pas avoir été conçues pour résister à des températures de gaz correspondant à un mélange d'air frais avec des gaz chauds brûlés recirculés.

Afin d'éviter d'endommager de telles pièces, ou d'endommager d'autres pièces du circuit de recirculation de gaz, différentes solutions sont proposées pour maîtriser la température des gaz recirculés.

Par exemple, le brevet FR 2 119 023 divulgue un procédé pour protéger thermiquement une vanne EGR.

Le système surveille la température d'au moins un point sensible du circuit de recirculation de gaz, et comptabilise le temps passé au-dessus d'un point thermiquement critique. Quand le compteur de temps passé comptabilise une durée supérieure à un seuil, le mode de pilotage du moteur bascule vers un pilotage dans lequel la consigne de débit d'air frais entrant est calculée à l'aide de cartographies différentes de celles utilisées en mode normal.

La cartographie correspondant à ce mode sécurisé impose un débit d'air supérieur de l'ordre de 20 à 25% au débit d'air en mode normal. Il en résulte une réduction de la température du point critique, qui peut être par exemple une vanne EGR.

Le brevet EP 0 935 060 divulgue un procédé de régulation de la température d'une boucle EGR dans lequel, si une température mesurée du circuit EGR dépasse une valeur seuil pendant une durée seuil, alors une vanne de commande de recirculation de gaz EGR basse pression est fermée de manière réglable.

La valeur de fermeture de la vanne EGR peut notamment être tabulée dans une cartographie en fonction de l'écart de température entre la température mesurée et la température souhaitée au niveau de la vanne EGR. Selon une autre variante de réalisation, la différence de température peut être envoyée à un régulateur qui délivre une valeur corrigée d'ouverture de la vanne EGR.

La demande de brevet WO 2008/152491 divulgue un procédé pour une mise à l'écart de température d'air admis par rapport à une cible et pour régler précisément une consigne de taux d'EGR haute pression. Quand le taux d'EGR haute pression est en dessous d'un seuil, on modifie le phasage des soupapes afin d'ajuster la proportion de gaz brûlés recirculés.

Les documents FR 2 919 023 et WO 2008/152491 proposent de basculer d'un mode de régulation particulier à un autre mode de régulation particulier, suivant que la température mesurée de gaz EGR et/ou la proportion de gaz EGR se trouve au dessus ou en dessous d'un certain seuil. Le pilotage du moteur pendant les phases de « surchauffe » du circuit de recirculation n'est pas optimisé, mais est conçu pour introduire une phase de réduction de température de la zone sensible du circuit de recirculation.

Le document EP 0 935 060 propose d'appliquer a priori une cartographie de fermeture d'une vanne EGR ou une régulation de cette fermeture directement en fonction de l'écart de température entre le point de mesure d'une zone sensible du circuit de recirculation et une température maximale de consigne.

Le document n'explique pas comment est gérée la répercussion de la régulation de la fermeture de la vanne EGR sur le schéma global de débit de gaz dans les circuits du moteur, et notamment sur une éventuelle dérive du point de fonctionnement du moteur due à la fermeture de la vanne EGR.

La demande de brevet FR 2 902 466 divulgue un moteur à combustion interne selon le préambule de la revendication 1.

L'invention a pour but de proposer un dispositif de pilotage et de régulation d'un moteur à combustion interne permettant de maintenir un ajustement permanent du point de fonctionnement du moteur par rapport à une consigne de pédale d'accélération du véhicule, tout en permettant une maîtrise continue d'une ou de plusieurs températures de points sensibles du circuit de recirculation de gaz du moteur pour éviter une dérive de ces températures au dessus d'une ou de plusieurs valeurs seuil.

A cette fin, l'invention propose un moteur à combustion selon la revendication indépendante 1.

Le second calculateur de consigne de débit d'air frais peut comprendre un premier régulateur de type proportionnel intégral ou proportionnel intégral dérivé, configuré pour recevoir sur une entrée une différence entre la température mesurée au niveau d'une conduite de recirculation de gaz brûlés et une température seuil.

Selon un mode particulier de réalisation, le premier régulateur de type proportionnel intégral peut être configuré pour recevoir la valeur absolue de la différence entre la température mesurée au niveau d'une conduite de recirculation de gaz brûlés et une température seuil.

Le dispositif comprend un second régulateur configuré pour calculer à partir de la valeur majorée de consigne de débit d'air, une consigne de position d'au moins un dispositif de régulation de débit de gaz du circuit de gaz du moteur.

Le second régulateur peut être configuré pour recevoir sur une entrée une différence entre la valeur majorée de consigne de débit d'air, et une valeur mesurée ou estimée de débit d'air frais entrant dans le moteur.

Le premier calculateur peut être configuré pour élaborer la première valeur de consigne de débit d'air frais du moteur à partir notamment de valeurs de points de fonctionnement du moteur, et d'une valeur mesurée de température d'air extérieur au véhicule.

Le premier calculateur peut être configuré pour élaborer la première valeur de consigne de débit d'air frais du moteur en prenant également en compte une température de liquide de refroidissement du moteur et/ou la pression atmosphérique ambiante.

L'invention divulgue un véhicule automobile comprenant un moteur à combustion interne avec un circuit de recirculation de gaz brûlés du moteur, comprenant au moins un capteur de température disposé au niveau du circuit de recirculation de gaz brûlés, et comprenant un dispositif de régulation tel que décrit précédemment.

Selon un autre aspect, l'invention propose un procédé de régulation de la consommation en air d'un moteur à combustion interne, selon la revendication 7.

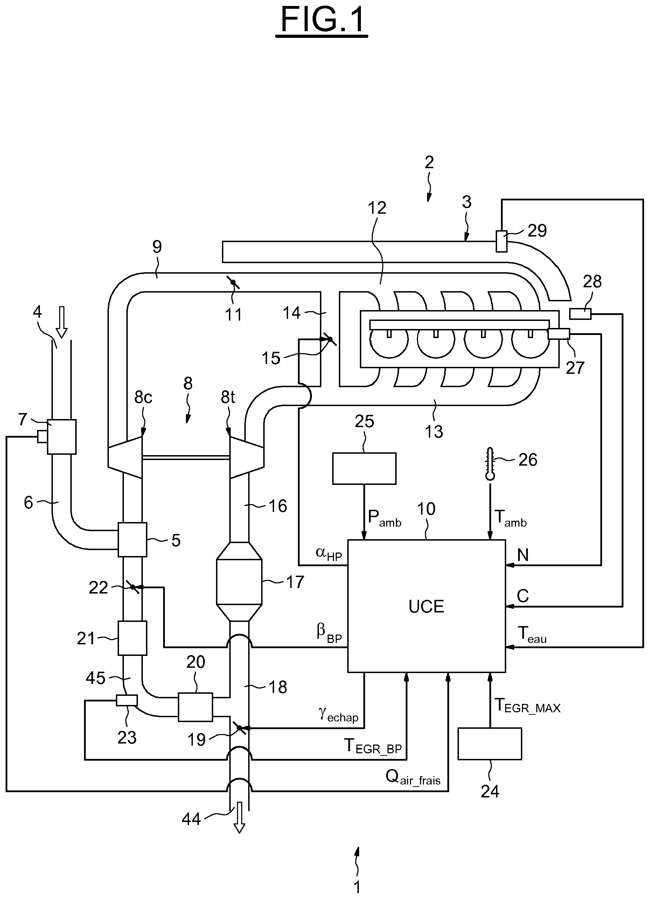

Tel qu'illustré sur la figure 1, un dispositif 1 de régulation de la consommation en air frais d'un moteur 2 à combustion interne comprend une unité de commande électronique 10 apte à piloter des vannes 15, 19, 22 du circuit de gaz du moteur 2 et est relié à un certain nombre de capteurs ou d'estimateurs 7, 23, 25, 26, 27, 28, 29. L'unité de commande électronique 10 peut également comprendre des cartographies (non représentées sur la figure 1) et des mémoires dans lesquelles sont enregistrées les valeurs de référence, par exemple une mémoire 24 dans laquelle est enregistrée une température maximale T_{EGR_MAX}.à ne pas dépasser en un point donné d'un circuit de recirculation de gaz.

Le moteur 2 est alimenté en air frais à partir d'une admission d'air frais 4. L'air frais traverse une tubulure d'admission 6 sur laquelle est disposé un débitmètre d'air frais 7 qui transmet à l'unité de commande électronique 10 un débit d'air frais Q_{air_frais}.

La tubulure 6 débouche dans un mélangeur 5 dans lequel débouche également une conduite de gaz recirculés à basse pression ou conduite EGR BP, référencée 45.

Le mélange d'air frais et de gaz recirculés traverse un compresseur 8c d'un turbocompresseur 8, transite par une conduite aval 9 au compresseur dans lequel le débit de gaz peut être régulé à l'aide d'un volet d'admission 11, et arrive à un collecteur d'admission 12 du moteur 2. Les gaz brûlés du moteur sont récupérés par un collecteur d'échappement 13 qui communique avec une conduite de recirculation de gaz à haute pression ou conduite EGR HP référencée 14, et dans laquelle le débit de gaz peut être régulé à l'aide d'une vanne 15 de régulation de la recirculation de gaz à haute pression, qui débouche dans le collecteur d'admission 12.

Les gaz brûlés du collecteur d'échappement 13 s'écoulent par ailleurs au travers d'une turbine 8t du compresseur 8, sont recueillis par une conduite 16 en aval de la turbine, traversent un système de dépollution 17 (qui peut comprendre un pot catalytique et un filtre à particules - non représentés -) et sont évacué par une conduite d'échappement 18 vers une sortie 44 des gaz vers l'extérieur du véhicule.

La conduite d'échappement 18 communique avec la conduite de recirculation de gaz à basse pression 45. Entre la sortie de l'échappement 44 et l'entrée de la conduite de recirculation 45 se trouve un volet d'échappement 19 qui permet de limiter la quantité de gaz brûlés envoyés à l'extérieur du véhicule, au profit de ceux envoyés dans le système de recirculation basse pression.

Le long de la conduite 45 de recirculation de gaz brûlés peuvent se trouver dans différents dispositifs dont la température maximale de fonctionnement ne doit pas dépasser certains seuils de température, par exemple un volet de recirculation basse pression 22, un échangeur thermique 21 permettant de récupérer une partie des calories des gaz brûlés transitant par la conduite 45, ou un filtre 20.

L'unité de commande électronique 10 est configurée pour pouvoir envoyer des consignes de position aux différents dispositifs de régulation des débits de gaz, par exemple une valeur de position angulaire β_{BP} au volet de recirculation basse pression 22, une valeur de position γ_{echap} au volet 19 d'échappement, une valeur α_{HP} à la vanne 15 de recirculation de gaz brûlés à haute pression. Le moteur 2 est refroidi par un circuit 3 de liquide de refroidissement. Un capteur de température 29 transmet la température du liquide de refroidissement Tₑₐᵤ à l'unité de commande électronique 10. L'unité de commande électronique 10 reçoit en outre, du capteur de température 23 disposé sur la conduite de recirculation des gaz brûlés à basse pression 45, une température de gaz T_{EGR_BP}, reçoit d'un capteur de vitesse de rotation 27 du moteur, une vitesse de rotation N du moteur, reçoit d'un estimateur de couple du moteur 28 du moteur, une valeur C de couple estimé développé par le moteur.

Le couple du moteur peut être estimé par des méthodes connues, prenant par exemple en compte le volume de carburant injecté dans chaque cylindre du moteur à chaque cycle de combustion. L'unité de commande électronique 10 reçoit également une valeur de température ambiante T_{amb} d'un capteur 26 de température d'air extérieur au véhicule, et éventuellement une valeur de pression P_{amb} d'un baromètre 25, correspondant à la pression atmosphérique du moment.

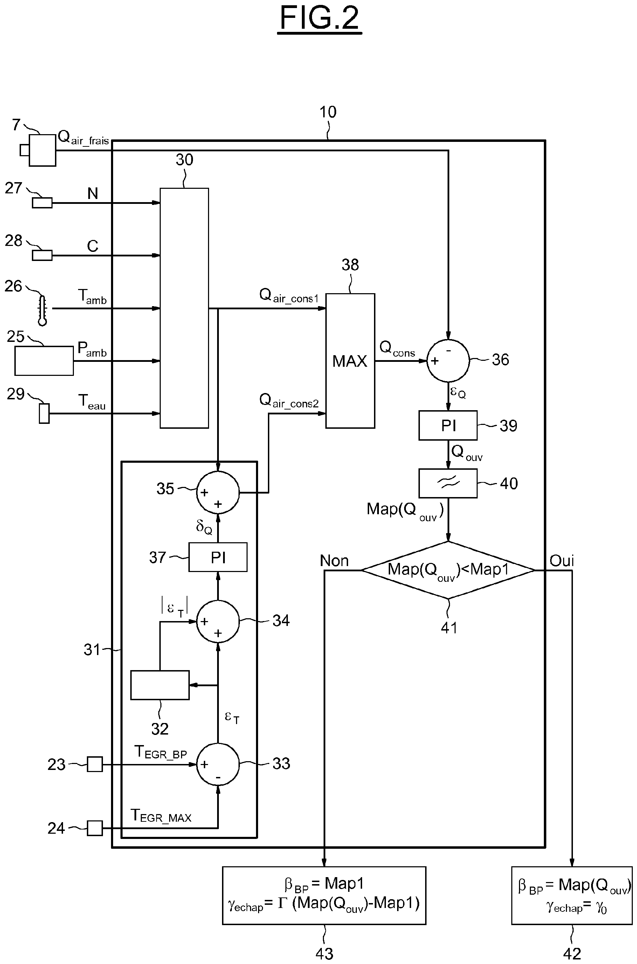

Afin d'éviter une surchauffe des éléments 21, 22, 20 présents sur la conduite de recirculation 45, l'unité de commande électronique adapte le pilotage de la consommation en air frais du moteur 2 suivant le principe exposé en figure 2.

On retrouve sur la figure 2 des éléments communs à la figure 1, les mêmes éléments étant désignés par les mêmes références. Tel qu'illustré sur la figure 2, l'unité de commande électronique 10 comprend un premier calculateur 30 des besoins en air frais du moteur qui reçoit notamment les valeurs N, C correspondant au point de fonctionnement du moteur, la valeur T_{amb} de température de l'air extérieur au véhicule, la valeur de pression P_{amb} atmosphérique du moment et la valeur de température Tₑₐᵤ du liquide de refroidissement du véhicule. L'unité de commande électronique 10 comprend également un second calculateur 31 des besoins en air frais du moteur, comprenant un premier régulateur 37. L'unité de commande électronique 10 comprend un comparateur ou extracteur 38 de valeur maximale, configuré pour délivrer la valeur la plus haute parmi deux valeurs qu'il reçoit en entrée, respectivement du premier calculateur 30 et du second calculateur 31.

L'unité de commande électronique 10 comprend un second régulateur 39 recevant en entrée une différence δ_{Q} -délivrée par un soustracteur 36- entre une valeur majorée Q_{cons} de débit d'air frais délivrée par le comparateur 38, et la valeur mesurée de débit d'air frais Q_{air_frais} délivrée par le débitmètre 7.

Le second calculateur 31 de besoins en air frais du moteur reçoit comme seule valeur mesurée en entrée, la température T_{EGR_BP} émise par le capteur de température 23 et reçoit en entrée ―ou détient dans une de ses cases mémoire 24- une température constante T_{EGR_MAX}. La valeur mesurée 23 et la valeur mémorisée 24 sont envoyées sur deux entrées d'un premier soustracteur 33 qui délivre une différence ε_{T} entre la température mesurée et la température maximale admissible T_{EGR_MAX}.

Un opérateur de valeur absolue 32 calcule une valeur absolue de cette différence ε_{T}. La différence ε_{T} et sa valeur absolue sont additionnées au niveau d'un premier sommateur 34, qui délivre ainsi une valeur redressée de la différence ε_{T} et l'envoie à un premier régulateur 37, par exemple de type proportionnel intégral. Le régulateur 37 délivre une valeur corrective δ_{Q} qui est envoyée sur une première entrée d'un second sommateur 35 qui reçoit sur une autre entrée, la première consigne de débit d'air frais Q_{air_cons1} délivrée par le premier calculateur 30.

Le second sommateur 35 délivre ainsi une valeur corrigée Q_{air_cons2} qui est envoyée sur une des entrées du comparateur 38.

Le comparateur 38 délivre ainsi une valeur majorée de consigne de débit d'air Q_{cons}. Celle-ci est envoyée comme décrit précédemment sur une des entrées du second soustracteur 36 qui reçoit sur l'autre entrée le débit mesuré de débit d'air frais Q_{air_frais} issu du débitmètre d'air frais 7. Le débit d'air frais mesuré est ainsi comparé à un débit d'air frais qui est majoré de manière régulée, afin d'éviter une surchauffe au niveau du point 23 de mesure de température.

A partir de cette différence, le second régulateur 39 délivre une valeur de commande Qₒᵤᵥ proportionnelle par exemple à une consigne finale de débit d'air frais, qui est ensuite convertie en position β_{BP} et en position γ_{echap} respectivement du volet EGR 22 et du volet d'échappement 19. Les modifications de position de ces deux volets induisent une modification des écoulements gazeux qui se répercutent en particulier sur le débit d'air frais entrant dans le moteur. Leur position est donc, selon l'invention, régulée de manière à conjointement éviter les surchauffes aux points sensibles, à limiter les émissions polluantes, et à assurer une alimentation en air frais au plus près de la consigne de couple émanant du conducteur (consigne à la pédale).

La conversion du débit de consigne Qₒᵤᵥ en position de volet β_{BP} et γ_{echap} peut se faire par exemple en utilisant une ou plusieurs cartographies 40 servant à lire une première valeur Map(Qₒᵤᵥ) correspondant à la position de l'un des volets 19 ou 22, et à vérifier si -cette valeur Map(Qₒᵤᵥ) reste en dessous d'un certain seuil, ce qui est représenté sur la figure 2 par une étape de test 41. Si le résultat du test 41 est positif, à l'étape 42 on affecte une valeur arbitraire -ici γ₀ à la position du volet d'échappement 19, et on lit la position β_{BP} du volet 22 du circuit de recirculation directement dans la cartographie 40. Si le résultat du test 41 est négatif, à l'étape 43, on affecte une valeur arbitraire Map1 à la position β_{BP} du volet, et on utilise une autre cartographie (non représentée) définissant une fonction Γ et permettant de lire la position γ_{echap} du volet 19.

Ainsi, le second régulateur 39 qui pilote le système de volets entre la vanne du moteur et le point de mélange des gaz brûlés recyclés avec l'air frais aspiré par le moteur, reçoit une consigne de débit d'air frais Qₒᵤᵥ qui tient compte à la fois des besoins en air frais du moteur « a priori » compte tenu du couple demandé à la pédale, et des conditions de combustion et d'alimentation gazeuse en pression et en température. Une première consigne « a priori » Q_{air_cons1} est élaborée par le premier calculateur 30. Le dispositif tient également compte d'une valeur corrigée de consigne de débit d'air qui est calculée à l'aide d'un régulateur en fonction de la première consigne de débit d'air, et d'une consigne de température à ne pas dépasser T_{EGR_MAX}.

Cette valeur corrigée est calculée de manière à aller dans le sens de réduction de la température au point de mesure 23, chaque fois qu'une température supérieure au seuil T_{EGR_MAX} est mesurée.

Par sécurité, le second régulateur 39 est piloté en utilisant la plus grande des valeurs parmi la première consigne de débit d'air et la consigne de débit d'air corrigée.

On peut envisager des variantes de réalisation dans lesquelles le second régulateur 39 reçoit un écart de débit d'air ε_{Q} issu d'un soustracteur 36 qui reçoit lui-même sur une des ses entrées directement la valeur corrigée issue du second calculateur 31 de besoins en air frais du moteur.

L'ajustement du débit d'air frais du moteur, piloté au moyen de volets ou de vannes se trouvant au niveau d'au moins un circuit de recirculation des gaz brûlés permet ainsi d'ajuster le débit de gaz brûlés résultant, et d'ajuster la consommation en air frais du moteur tout en garantissant de ne pas dépasser les températures-seuil T_{EGR_MAX} en un des points d'un circuit de recirculation de gaz brûlés.

On peut envisager des variantes de réalisation dans lesquelles la température surveillée se trouverait sur un circuit de recirculation des gaz brûlés à haute pression, par exemple sur la conduite 14. Le second calculateur 31 recevrait alors en entrée une température mesurée au niveau de cette conduite 14 au lieu d'une température mesurée au niveau de la conduite 45, et le seuil de température T_{EGR_MAX} serait adapté en fonction des résistances thermiques des éléments de cette conduite. La valeur majorée de consigne de débit d'air issue du comparateur 38 ou issue du second calculateur 31 serait alors toujours soustraite de la consigne de débit d'air frais Q_{air_frais} mesurée, servirait à calculer une consigne de débit d'air sécurisée Qₒᵤᵥ qui servirait alors à piloter conjointement le volet d'échappement 19 et la vanne d'EGR haute pression 15, par exemple pendant les phases de démarrage du moteur lors que le moteur est froid.

On peut également envisager des variantes de réalisation comprenant deux seconds calculateurs de besoins en air frais du moteur, qui sont utilisés alternativement pendant les phases de démarrage du moteur et pendant les phases de roulage quand le moteur est déjà chaud, respectivement pour surveiller la température au niveau de la conduite EGR haute pression 14 et au niveau de la conduite EGR basse pression 45.

L'invention ne se limite pas aux exemples de réalisation décrits et peut se décliner en de nombreuses variantes. La conversion de la consigne sécurisée de débit d'air Qₒᵤᵥ en sortie du second régulateur 39 peut se faire à l'aide de cartographies ou à l'aide de fonctions empiriques reliant une ouverture souhaitée des volets 19, 22 et le débit d'air visé.

Selon que l'on considère que le second calculateur 31 englobe ou non le comparateur 38, il est possible de considérer que le calculateur 31 délivre directement la valeur majorée de consigne de débit d'air Q_{cons}, ou au contraire considérer qu'il ne délivre qu'une valeur corrigée Q_{air_cons}. Dans les modes de réalisation sans comparateur 38, -comportant alors de préférence un redresseur/opérateur 32 de valeur absolue-, valeur corrigée et valeur majorée de débit d'air sont confondues.

Le premier calculateur 30 peut prendre en compte des paramètres de fonctionnement du moteur non mentionnés sur la figure 2. Le second calculateur 31 pourrait effectuer la régulation directement sur l'écart de température ε_{T} sans effectuer de redressement pour prendre la valeur de cet écart, à condition de préférence d'utiliser alors un comparateur 38 pour imposer toujours le plus fort des débits d'air parmi le débit d'air « a priori » calculé par le premier calculateur 30 et la valeur corrigée issue du second calculateur 31.

Le dispositif de régulation selon l'invention permet de limiter les températures atteintes aux points sensibles des circuits de recirculation de gaz brûlés en intégrant cette régulation directement dan le processus de régulation du débit d'air frais du moteur de manière à perturber le moins possible ces variations de débit d'air frais.

## Revendications

1. Moteur (2) à combustion interne, notamment pour véhicule automobile, comprenant au moins un circuit de recirculation partielle de gaz brûlés à basse pression et un dispositif (1) de régulation de la consommation en air du moteur (2) avec un premier calculateur (30) d'une première valeur (Q_{air_cons1}) de consigne de débit d'air frais du moteur, **caractérisé en ce que** le dispositif de régulation comprend en outre un second calculateur (31) de consigne de débit d'air frais configuré pour élaborer à partir d'une valeur de température (T_{EGR_BP}) mesurée par un capteur de température (23) disposé sur une conduite (45) de recirculation de gaz brûlés à basse pression et de la première consigne (Q_{air_cons1}) de débit d'air frais, une valeur corrigée (Q_{air_cons2}) de la consigne de débit d'air frais et **en ce qu'**il comprend un comparateur (38) apte à délivrer une valeur majorée (Q_{cons}) de consigne de débit d'air frais correspondant à la valeur la plus haute parmi la première consigne (Q_{air_cons1}) de débit d'air frais et la valeur corrigée (Q_{air_cons2}) de consigne de débit d'air frais, le dispositif de régulation comprenant un second régulateur (39) configuré pour calculer à partir de la valeur majorée (Q_{cons}) de consigne de débit d'air frais, une consigne de position (β_{BP}, γ_{echap}) d'au moins un dispositif de régulation (19, 22) de débit de gaz du circuit de gaz du moteur.

2. Moteur (2) selon la revendication 1, dans lequel le second calculateur (31) de consigne de débit d'air frais comprend un premier régulateur (34) de type proportionnel intégral ou proportionnel intégral dérivé, configuré pour recevoir sur une entrée une différence (ε_{T}) entre la température (T_{EGR_BP}) mesurée au niveau de la conduite (45) de recirculation de gaz brûlés à basse pression et une température seuil (T_{EGR_MAX}).

3. Moteur (2) selon la revendication précédente, dans lequel le premier régulateur (34) de type proportionnel intégral est configuré pour recevoir la valeur absolue (|ε_{T}|) de la différence entre la température (T_{EGR_BP}) mesurée au niveau de la conduite (45) de recirculation de gaz brûlés à basse pression et une température seuil (T_{EGR_MAX}).

4. Moteur (2) selon l'une quelconque des revendications précédentes, dans lequel le second régulateur (39) est configuré pour recevoir sur une entrée une différence entre la valeur majorée (Q_{cons}) de consigne de débit d'air, et une valeur mesurée ou estimée (Q_{air_frais}) de débit d'air frais entrant dans le moteur (2).

5. Moteur (2) selon l'une quelconque des revendications précédentes, dans lequel le premier calculateur (30) est configuré pour élaborer la première valeur (Q_{air_cons1}) de consigne de débit d'air frais du moteur à partir notamment de valeurs de points de fonctionnement (N, C) du moteur, et d'une valeur mesurée de température d'air (T_{amb}) extérieur au véhicule.

6. Moteur (2) selon la revendication précédente, dans lequel le premier calculateur (30) est configuré pour élaborer la première valeur (Q_{air_cons1}) de consigne de débit d'air frais du moteur en prenant également en compte une température (Tₑₐᵤ) de liquide de refroidissement du moteur et/ou la pression atmosphérique (P_{amb}) ambiante.

7. Procédé de régulation de la consommation en air d'un moteur à combustion interne selon l'une quelconque des revendications 1 à 6, dans lequel on élabore une première consigne (Q_{air_cons1}) de débit d'air frais entrant dans le moteur (2), **caractérisé en ce que** l'on effectue une régulation sur un écart (ε_{T}) de température entre une température mesurée (T_{EGR_BP}) au niveau d'une conduite (45) de recirculation de gaz brûlés à basse pression et une température seuil (T_{EGR_MAX}), pour délivrer une valeur corrigée (Q_{air_cons2}) de consigne de débit d'air frais, on calcule à l'aide de cette valeur corrigée (Q_{air_cons2}) et de la première consigne de débit d'air frais (Q_{air_cons1}), une valeur majorée (Q_{cons}) de consigne de débit d'air, et l'on utilise la valeur majorée de consigne de débit d'air pour calculer une consigne de position (β_{BP},γ_{echap}) d'au moins un dispositif de régulation (19,22) de débit de gaz du circuit de gaz du moteur afin de réguler le débit de gaz du circuit de gaz du moteur.

## Patentansprüche

1. Verbrennungsmotor (2), insbesondere für ein Kraftfahrzeug, umfassend mindestens einen Kreislauf zur teilweisen Rückführung von Niederdruckabgasen und eine Vorrichtung (1) zur Regelung des Luftverbrauchs des Motors (2) mit einem ersten Rechner (30) für einen ersten Frischluftdurchsatz-Vorgabewert (Q_{air_cons1}) des Motors, **dadurch gekennzeichnet, dass** die Regelvorrichtung ferner einen zweiten Rechner (31) für einen Frischluftdurchsatz-Vorgabewert umfasst, der dazu ausgebildet ist, anhand eines Temperaturwerts (T_{EGR_BP}), der von einem Temperatursensor (23) gemessen wird, der an einer Rückführleitung (45) für Niederdruckabgase angeordnet ist, und des ersten Frischluftdurchsatz-Vorgabewerts (Q_{air_cons1}) einen korrigierten Frischluftdurchsatz-Vorgabewert (Q_{air_cons2}) zu erstellen, und dadurch, dass sie einen Komparator (38) umfasst, der geeignet ist, einen angehobenen Frischluftdurchsatz-Vorgabewert (Q_{cons}) zu liefern, der dem höchsten Wert von dem ersten Frischluftdurchsatz-Vorgabewert (Q_{air_cons1}) und dem korrigierten Frischluftdurchsatz-Vorgabewert (Q_{air_cons2}) entspricht, wobei die Regelvorrichtung einen zweiten Regler (39) umfasst, der dazu ausgebildet ist, anhand des angehobenen Frischluftdurchsatz-Vorgabewerts (Q_{cons}) eine Positionsvorgabe (β_{BP}, γ_{echap}) mindestens einer Gasdurchsatz-Regelvorrichtung (19, 22) des Gaskreislaufs des Motors zu berechnen.

2. Motor (2) nach Anspruch 1, wobei der zweite Rechner (31) für einen Frischluftdurchsatz-Vorgabewert einen ersten Regler (34) vom Proportional-Integral- oder Proportional-Integral-Derivativ-Typ umfasst, der dazu ausgebildet ist, an einem Eingang eine Differenz (ε_{T}) zwischen der Temperatur (T_{EGR_BP}), die an der Rückführleitung (45) für Niederdruckabgase gemessen wird, und einer Schwellentemperatur (T_{EGR_MAX}) zu empfangen.

3. Motor (2) nach dem vorhergehenden Anspruch, wobei der erste Regler (34) vom Proportional-Integral-Typ dazu ausgebildet ist, den Absolutwert (|ε_{T}|) der Differenz zwischen der Temperatur (T_{EGR_BP}), die an der Rückführleitung (45) für Niederdruckabgase gemessen wird, und einer Schwellentemperatur (T_{EGR_MAX}) zu empfangen.

4. Motor (2) nach einem der vorhergehenden Ansprüche, wobei der zweite Regler (39) dazu ausgebildet ist, an einem Eingang eine Differenz zwischen dem angehobenen Frischluftdurchsatz-Vorgabewert (Q_{cons}) und einem gemessenen oder geschätzten Durchsatzwert (Q_{air_frais}) für Frischluft, die in den Motor (2) eintritt, zu empfangen.

5. Motor (2) nach einem der vorhergehenden Ansprüche, wobei der erste Rechner (30) dazu ausgebildet ist, den ersten Frischluftdurchsatz-Vorgabewert (Q_{air_cons1}) des Motors insbesondere anhand von Betriebspunktwerten (N, C) des Motors und eines gemessenen Temperaturwerts von Luft (T_{amb}) außerhalb des Fahrzeugs zu erstellen.

6. Motor (2) nach dem vorhergehenden Anspruch, wobei der erste Rechner (30) dazu ausgebildet ist, den ersten Frischluftdurchsatz-Vorgabewert (Q_{air_cons1}) des Motors auch unter Berücksichtigung einer Temperatur (Tₑₐᵤ) von Kühlflüssigkeit des Motors und/oder des Umgebungsatmosphärendrucks (P_{amb}) zu erstellen.

7. Verfahren zur Regelung des Luftverbrauchs eines Verbrennungsmotors nach einem der Ansprüche 1 bis 6, wobei eine erste Vorgabe (Q_{air_cons1}) für Frischluft, die in den Motor (2) eintritt, erstellt wird, **dadurch gekennzeichnet, dass** eine Regelung an einer Temperaturabweichung (ε_{T}) zwischen einer Temperatur (T_{EGR_BP}), die an einer Rückführleitung (45) für Niederdruckabgase gemessen wird, und einer Schwellentemperatur (T_{EGR_MAX}) durchgeführt wird, um einen korrigierten Frischluftdurchsatz-Vorgabewert (Q_{air_cons2}) zu liefern, dass mithilfe dieses korrigierten Werts (Q_{air_cons2}) und der ersten Frischluftdurchsatz-Vorgabe (Q_{air_cons1}) ein angehobener Luftdurchsatz-Vorgabewert (Q_{cons}) berechnet wird und der angehobene Luftdurchsatz-Vorgabewert dafür genutzt wird, eine Positionsvorgabe (β_{BP}, γ_{echap}) mindestens einer Gasdurchsatz-Regelvorrichtung (19, 22) des Gaskreislaufs des Motors zu berechnen, um den Gasdurchsatz des Gaskreislaufs des Motors zu regeln.

## Claims

1. Internal combustion engine (2), notably for a motor vehicle, comprising at least one partial low-pressure exhaust gas recirculation circuit and a device (1) for regulating the air consumption of the engine (2) with a first calculator (30) of a first fresh air flow-rate setpoint value (Q_{air_cons1}) of the engine, **characterized in that** the regulation device further comprises a second fresh air flow-rate setpoint calculator (31) configured to generate, from a temperature value (T_{EGR_BP}) measured by a temperature sensor (23) arranged on a low-pressure exhaust gas recirculation line (45) and from the first fresh air flow-rate setpoint (Q_{air_cons1}), a corrected value (Q_{air_cons2}) of the fresh air flow-rate setpoint and **in that** it comprises a comparator (38) capable of delivering an uprated fresh air flow-rate setpoint value corresponding to the highest value out of the first fresh air flow-rate setpoint (Q_{air_cons1}) and the corrected fresh air flow-rate setpoint value (Q_{air_cons2}), the regulation device comprising a second regulator (39) configured to calculate, from the uprated fresh air flow-rate setpoint value (Q_{cons}), a position setpoint (β_{BP}, γ_{echap}) of at least one gas flow-rate regulation device (19, 22) of the gas circuit of the engine.

2. Engine (2) according to Claim 1, wherein the second fresh air flow-rate setpoint calculator (31) comprises a first regulator (34) of proportional integral type or proportional integral derivative type, configured to receive, on an input, a difference (ε_{T}) between the temperature (T_{EGR_BP}) measured in the low-pressure exhaust gas recirculation line (45) and a threshold temperature (T_{EGR_MAX}).

3. Engine (2) according to the preceding claim, wherein the first regulator (34) of proportional integral type is configured to receive the absolute value (|ε_{T}|) of the difference between the temperature (T_{EGR_BP}) measured in the low-pressure exhaust gas recirculation line (45) and a threshold temperature (T_{EGR_MAX}).

4. Engine (2) according to any one of the preceding claims, wherein the second regulator (39) is configured to receive, on an input, a difference between the uprated air flow-rate setpoint value (Q_{cons}) and a measured or estimated value (Q_{air_frais}) of fresh air flow-rate entering into the engine (2).

5. Engine (2) according to any one of the preceding claims, wherein the first calculator (30) is configured to generate the first engine fresh air flow-rate setpoint value (Q_{air_cons1}) notably from operating point values (N, C) of the engine, and from a measured air temperature value (T_{amb}) outside the vehicle.

6. Engine (2) according to the preceding claim, wherein the first calculator (30) is configured to generate the first engine fresh air flow-rate setpoint value (Q_{air_cons1}) by also taking into account an engine coolant temperature (Tₑₐᵤ) and/or the ambient atmospheric pressure (P_{amb}).

7. Method for regulating the air consumption of an internal combustion engine according to any one of Claims 1 to 6, wherein a first setpoint (Q_{air_cons1}) of fresh air flow-rate entering into the engine (2) is generated, **characterized in that** a regulation is performed on a temperature difference (ε_{T}) between a measured temperature (T_{EGR_BP}) in a low-pressure exhaust gas recirculation line (45) and a threshold temperature (T_{EGR_MAX}), to deliver a corrected fresh air flow-rate setpoint value (Q_{air_cons2}), this corrected value (Q_{air_cons2}) and the first fresh air flow-rate setpoint (Q_{air_cons1}) are used to calculate an uprated air flow-rate setpoint value (Q_{cons}), and the uprated air flow-rate setpoint value is used to calculate a position setpoint (β_{BP}, γ_{echap}) of at least one gas flow-rate regulation device (19, 22) of the gas circuit of the engine in order to regulate the gas flow rate of the gas circuit of the engine.
